# EUROPÄISCHE PATENTSCHRIFT

(11) **EP 0 827 796 B1**
(45) Veröffentlichungstag und Bekanntmachung des Hinweises auf die Patenterteilung: **02.10.2002**
(21) Anmeldenummer: 97111015.0
(22) Anmeldetag: 02.07.1997
(51) Int. Cl.: B23B 31/26

(54) **Löseeinheit**
Uncoupling unit
Dispositif de découplement

(30) Priorität: 10.09.1996 DE 19636594
(43) Veröffentlichungstag der Anmeldung: 11.03.1998
(73) Patentinhaber: Röhm GmbH, 89567 Sontheim (DE)
(72) Erfinder: Benedikter, Elmar, 73441 Bopfingen (DE); Hangleiter, Eugen, 89568 Hermaringen (DE)
(74) Vertreter: Dziewior, Joachim, Dipl.-Phys. Dr.

(56) Entgegenhaltungen:
- EP-A- 0 170 387
- EP-A- 0 625 393
- FR-A- 2 481 633
- FR-A- 2 532 572
- FR-A- 2 540 411
- US-A- 4 553 886

## Beschreibung

Die Erfindung betrifft eine Löseeinheit einer Vorrichtung zum Betätigen eines an einer Arbeitsspindel angeschlossenen, eine in axialer Richtung der Arbeitsspindel verstellbare Zugstange aufweisenden Spannkopfes, mit mindestens einem Verriegelungselement, das aus einer Verriegelungsstellung, in der es mit einem an der Arbeitsspindel angeordneten Kupplungsring in Eingriff steht, in eine Lösestellung ohne Eingriff bewegbar ist, und mit einem an die Zugstange ansetzbaren, deren axialer Verstellung dienenden Kolben (siehe z.B. EP-A-625 393).

Eine derartige Löseeinheit ist aus der Praxis bekannt. Bei dieser ist das Verriegelungselement als zweiarmiger Hebel ausgebildet, der an dem der Arbeitsspindel zugewandten ersten Hebelarm einen in eine Nut des Kupplungsringes einzubringenden Haken aufweist. Der zweite Hebelarm weist einen Fuß auf, der zum Ende hin radial nach außen abgekröpft ist, wodurch sich eine radial innen liegende und eine radial außen liegende Fläche ergibt, die parallel zueinander ausgerichtet sind und schräg zur Achse der Löseeinheit liegen. Die radial innen liegende Fläche ragt in eine Nut, die an der Löseeinheit ausgebildet ist. Um den zweiarmigen Hebel als Verriegelungselement aus der Verriegelungsstellung mit in die Nut eingreifendem Haken in die Lösestellung zu überführen, ist an der Löseeinheit ein axial verstellbarer Ring vorgesehen, der an der dem Verriegelungselement zugewandten Seite eine schräg verlaufende Anlauffläche aufweist, an der die radial außen liegende Fläche des Hebels anliegt. Wird der Ring axial in Richtung des Verriegelungselementes verstellt, gleitet die radial außen liegende Fläche des zweiten Hebelarms an der Anlauffläche entlang, wodurch das Verriegelungselement um die Drehachse des Hebels verdreht wird, bis die radial innen liegende Fläche des zweiten Hebelarms am Boden der Nut anliegt. Insgesamt ergibt sich ein komplizierter Aufbau, der einen hohen Aufwand bei der Fertigung bedarf.

Die EP 0 170 387 A1 zeigt eine Spannvorrichtung für ein Werkzeug, bei der in einer Bohrung der Arbeitsspindel eine Kolbenstange angeordnet ist, die ihrerseits von einer Spannhülse mit Spannzungen umgeben ist. Die Spannzungen und die Kolbenstange weisen zueinander geneigte Schrägflächen auf, so daß bei einer gegenseitigen axialen Verschiebung die Spannzungen radial nach außen verstellt werden, in eine in der Arbeitsspindel ausgebildete Nut eingreifen und gegenüber der Nutwandung geklemmt werden, um bei einem Werkzeugwechsel eine Verstellung der Arbeitsspindel zu verhindern.

Der Erfindung liegt daher die Aufgabe zugrunde, eine Löseeinheit der eingangs genannten Art so auszubilden, daß ein einfacherer Aufbau der Löseeinheit erreicht wird, wobei zugleich die Handhabung verbessert werden soll.

Diese Aufgabe wird bei einer Löseeinheit mit den eingangs genannten Merkmalen dadurch gelöst, daß der Kupplungsring und das ringförmige Verriegelungselement komplementäre, sich nach dem Schloß-Schlüssel-Prinzip ergänzende Strukturen aufweisen, bei denen am Schloß ein Bolzen als Codierung ausgebildet ist, der in der Lösestellung bei einer geeigneten Winkelstellung des Schlüssels durch eine Ausnehmung in eine Nut des Schlüssels einführbar und durch eine Relativdrehung von dem Kupplungsring und dem ringförmigen Verriegelungselement um deren Längsachse in die Verriegelungsstellung hinter die Nutwand verdrehbar ist.

Die Erfindung bietet den Vorteil, daß beim Verriegelungselement auf bewegliche einzelne Teile verzichtet ist, die besonders gelagert werden müssen, und die sich verklemmen könnten. Um die Löseeinheit mit der Arbeitsspindel zu verbinden, ist es lediglich notwendig, die Löseeinheit und die Arbeitsspindel in eine geeignete relative Winkellage zu bringen, wodurch der Schlüssel mit der Ausnehmung in das Schloß eingebracht werden kann. Eine Verdrehung von Schloß und Schlüssel relativ zueinander bewirkt eine untrennbare Verbindung, die nur gelöst werden kann, wenn die anfängliche Winkelstellung wieder eingenommen wird, was beispielsweise dadurch unterstützt werden kann, daß die Arbeitsspindel zum Lösen in einer genau definierten Lage gestoppt wird. Am Verriegelungselement und am Kupplungsring können völlig plane Flächen ausgebildet werden, die einfach zu fertigen sind und eine gute Kraftübertragung gewährleisten.

Im Rahmen der Erfindung ist weiterhin vorgesehen, daß der Kupplungsring als Schloß mit dem Bolzen und das Verriegelungselement als Schlüssel mit der Ausnehmung und der Nut ausgebildet ist. Weiterhin sind die Bolzen zu mehreren vorgesehen, wodurch eine bessere Verteilung der Belastungen gegeben ist, die auftreten, weil die Bolzen die Bauteile des Kupplungsringes sind, die die in axialer Richtung wirkende Kräfte zwischen Löseeinheit und Arbeitsspindel aufnehmen.

Eine Weiterbildung der Erfindung ist dadurch gekennzeichnet, daß das Verriegelungselement in der der Arbeitsspindel zugewandten Stirnseite eine Bohrung mit der Nut in der Wandung aufweist, wobei in die Bohrung bei geeigneter Winkelstellung der Kupplungsring mit dem Bolzen einführbar ist. Bei dieser Ausführungsform ist das Verriegelungselement als kompakte Hülse gebildet, die einfach zu fertigen und im Betrieb sehr belastbar ist.

Zweckmäßigerweise liegen die Bolzen jeweils paarweise sich diametral gegenüber, wodurch ein symmetrischer Aufbau erreicht ist, mit beispielsweise bei zwei Bolzenpaaren vierzähliger Symmetrie, so daß in diesem Beispiel insgesamt vier Winkelstellungen der Arbeitsspindel vorhanden sind, in denen die Verbindung von Schloß und Schlüssel gelöst werden kann.

Die Beschränkung auf eine endliche Anzahl ausgewählter Winkelstellung, in denen Schloß und Schlüssel voneinander getrennt werden können, läßt sich gemäß einer bevorzugten alternativen Ausführungsform bei einer Löseeinheit der eingangs genannten Art dadurch überwinden, daß der Kupplungsring eine in Umfangsrichtung verlaufende Nut aufweist, und daß das Verriegelungselement als ein um eine Achse drehbarer Drehzapfen ausgebildet ist, der zu zweien als ein sich gegenüberliegendes Paar vorgesehen ist, daß jeder Drehzapfen an dem dem Kupplungsring zugewandten Ende eine auf einer Seite radial über seinen Umfang vorstehende Zapfennase aufweist, die aus der Lösestellung mit vom dem Kupplungsring abgewandter Zapfennase in die Verriegelungsstellung mit in die Nut des Kupplungsringes eingeführter Zapfennase verdrehbar ist. Bei dieser Ausführungsform kann eine beliebige Winkelstellung zwischen Arbeitsspindel und Verriegelungselement vorliegen. Außerdem ist die Drehachse des Verriegelungselementes parallel zu der Achse von Kolben und Arbeitsspindel angeordnet, so daß ein einfacher Zugriff auf die Verriegelungselemente dadurch ermöglicht ist, daß in der Verlängerung der Achse des Drehzapfens eine Bohrung angeordnet ist, durch die ein Werkzeug zum Verdrehen des Drehzapfens durchsteckbar ist. Ein eigenständiges, mit der Löseeinheit verbundenes Bauteil ist damit zur Verstellung des Verriegelungselementes bei dieser Ausführungsform nicht erforderlich.

Weiterhin empfiehlt es sich, eine Löseeinheit so auszubilden, daß die Achse des Drehzapfens durch einen drehfest mit diesem verbundenen Stift gebildet ist, der einen exzentrisch ausgebildeten Stiftbund aufweist, der in der Lösestellung an der Stirnseite eines exzentrisch zur Bohrung ausgebildeten Sackloches anliegt und in der Verriegelungsstellung des Drehzapfens in das Sackloch einführbar ist. Bei dieser Gestaltung des Drehzapfens ist das Verriegelungselement in der Verriegelungsstellung fest arretiert und kann nicht aus dieser wieder entfernt werden, solange nicht der Stift aktiv axial in eine Lage verschoben wird, in der Stiftbund außer Eingriff mit dem Sackloch ist.

Dabei ist vorzugsweise in der Verriegelungsstellung unter der Kraft einer Feder der Stift mit dem Stiftbund in das Sackloch einführbar, um zum einen das Einführen mittels der Feder zu unterstützen, zum anderen, um ein Entfernen des Stiftbundes aus dem Sackloch nur gegen die Federkraft zu ermöglichen.

Im folgenden soll die Erfindung an in der Zeichnung dargestellten Ausführungsbeispielen näher erläutert werden; es zeigen:
- Fig. 1: einen Querschnitt durch eine Vorrichtung zum Betätigen einer Arbeitsspindel mit einem Spannkopf in Spannstellung,
- Fig. 2: einen Spannkopf in einer der Fig. 1 entsprechenden Darstellung in Lösestellung,
- Fig. 3: eine der Fig. 1 entsprechende Darstellung einer
ersten Ausführungsform einer Löseeinheit,
- Fig. 4: den Schnitt IV-IV aus Fig. 3,
- Fig. 5: eine der Fig. 3 entsprechende Darstellung einer
zweiten Ausführungsform einer Löseeinheit mit dem Verriegelungselement in der Verriegelungsstellung,
- Fig. 6: der obere Teil der Löseeinheit aus Fig. 5 mit einem Verriegelungselement in der Lösestellung,
- Fig. 7: den Schnitt VII-VII aus Fig. 5, und
- Fig. 8: eine der Fig. 7 entsprechende Darstellung mit den Verriegelungselementen in der Lösestellung.

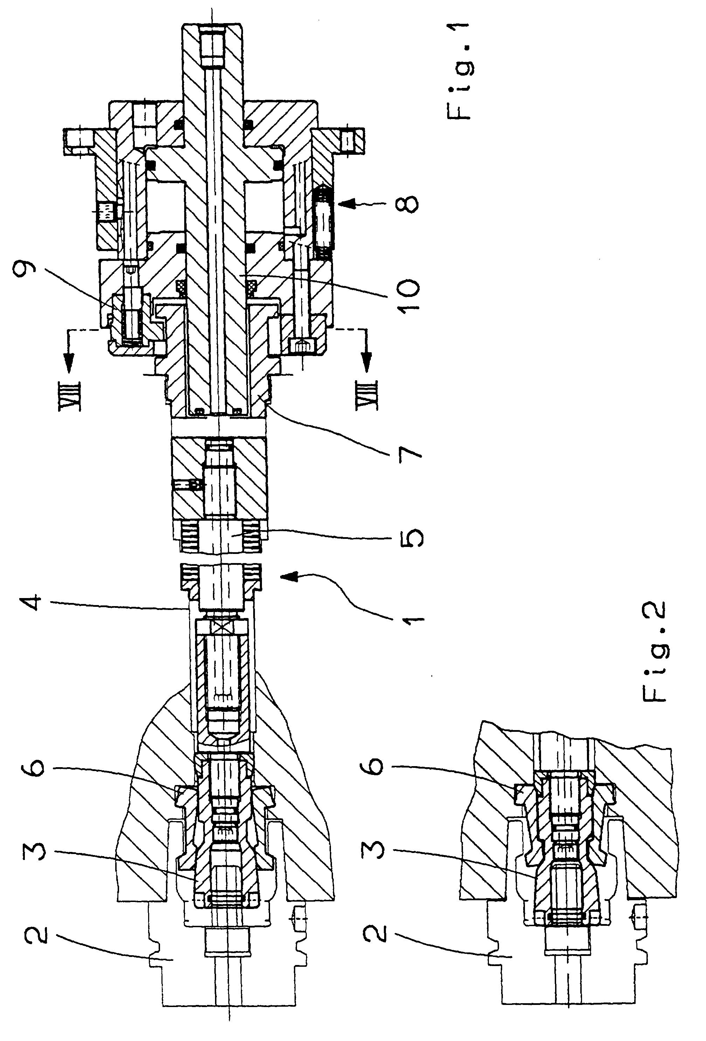

In der Fig. 1 ist eine Spannvorrichtung 1 gezeigt, mit der ein Werkzeug oder Werkstück 2 gespannt werden kann, das einen Hohlschaft aufweist. Der Spannkopf 3 ist an einem Ende einer Arbeitsspindel 4 angeschlossen und mit einer Zugstange 5 verbunden, die in axialer Richtung der Arbeitsspindel 4 verstellbar ist, so daß der Spannkopf 3 aus der in Fig. 1 gezeigten Spannstellung in die in Fig. 2 gezeigte Lösestellung überführt werden kann, bei denen die Spannklauen 6 außer Eingriff mit dem Hohlschaftkegel sind. Derartige Spannvorrichtungen 1 sind aus der Technik bekannt und brauchen daher hier detailliert nicht erläutert zu werden. An dem dem Spannkopf 3 abgewandten Ende der Arbeitsspindel 4 ist ein Kupplungsring 7 angeordnet, durch den eine Löseeinheit 8 mit der Spannvorrichtung 1 verbunden werden kann. Diese Löseeinheit 8 weist ein Verriegelungselement 9 auf, das aus einer Verriegelungsstellung, in der es mit dem an der Arbeitsspindel 4 angeordneten Kupplungsring 7 in Eingriff steht, in eine Lösestellung ohne Eingriff verstellt werden kann. Die Löseeinheit 8 weist weiterhin einen Kolben 10 auf, der durch ein Druckmittel beaufschlagbar ist, mittels dessen er in axialer Richtung verstellt werden kann, wobei diese Bewegung auf die Zugstange 5 übertragen wird, um den Spannkopf 3 zwischen der Spannstellung und der Lösestellung hin und her zu bewegen.

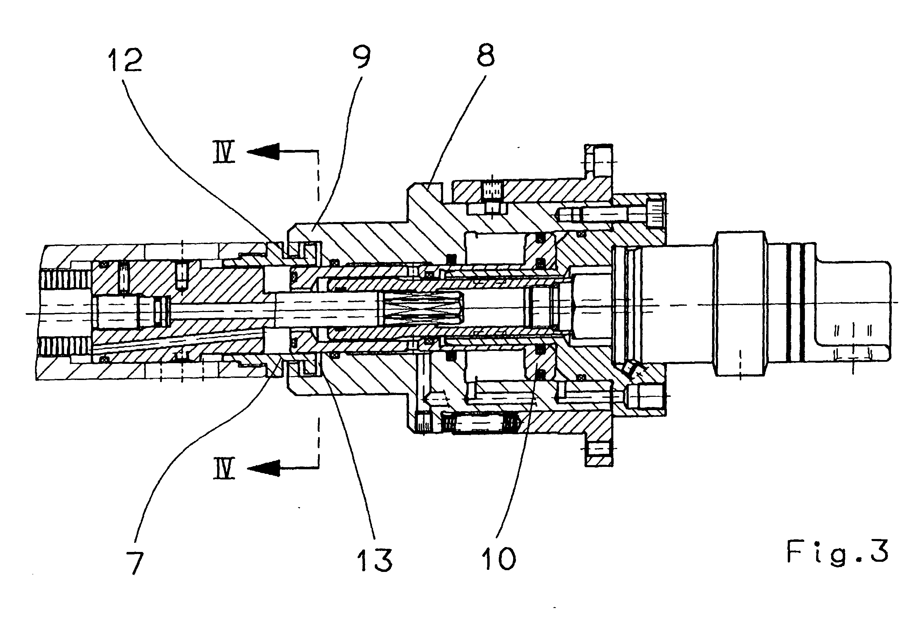

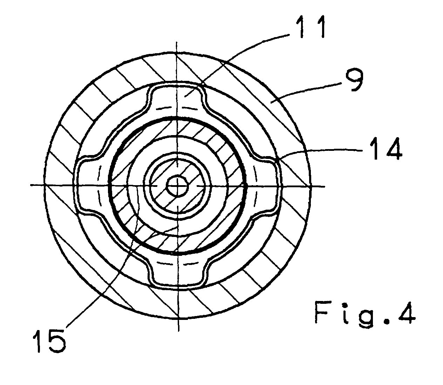

In den Fig. 3 und 4 ist eine erste Ausführungsform der Erfindung mit einer gegenüber Fig. 1 vergrößert dargestellten Löseeinheit 8 abgebildet. Bei dieser Ausführungsform weisen der Kupplungsring 7 und das Verriegelungselement 9 komplementäre, sich nach dem Schloß- Schlüssel-Prinzip ergänzende Strukturen auf, wobei der Kupplungsring als Schloß und das Verriegelungselement 9 als Schlüssel ausgebildet sind. Bei der in der Zeichnung dargestellten Ausführungsform sind am Kupplungsring 7 vier Bolzen 11 als Codierung ausgebildet. Das Verriegelungselement 9 weist an der der Arbeitsspindel 4 zugewandten Stirnseite eine Bohrung 12 auf, mit einer in Umfangsrichtung in die Innenwandung eingebrachten Nut 11. Weiterhin sind Ausnehmungen 14 vorhanden, die in Lage und Anzahl den Bolzen des Kupplungsringes 7 entsprechen, so daß beim Aufstecken der Löseeinheit 8 die Bolzen 11 durch die Ausnehmungen 14 des Verriegelungselementes 9 durchtreten und in die Nut 13 eingeführt werden können. Durch Verdrehung des Verriegelungselementes 9 um seine Längsachse wird das Verriegelungselement 9 aus der Lösestellung in die Verriegelungsstellung überführt. Die Bolzen 11 liegen sich jeweils paarweise diametral gegenüber und sind weiterhin gleichmäßig über den Umfang des Kupplungsringes 7 verteilt, so daß bei der in der Fig. 4 dargestellten Ausführungsform eine vierzählige Symmetrie vorliegt und damit vier Winkelstellungen gegeben sind, in denen das Verriegelungselement 9 und der Kupplungsring 7 kuppelbar sind. Sind die Bolzen 11 nicht gleichmäßig über den Umfang des Kupplungsringes 7 verteilt, so daß die Verbindungsgeraden 15 der Paare sich nicht senkrecht schneiden, reduziert sich die Symmetrie und damit die Anzahl der Winkelstellungen, die ein Kuppeln oder Trennen ermöglichen.

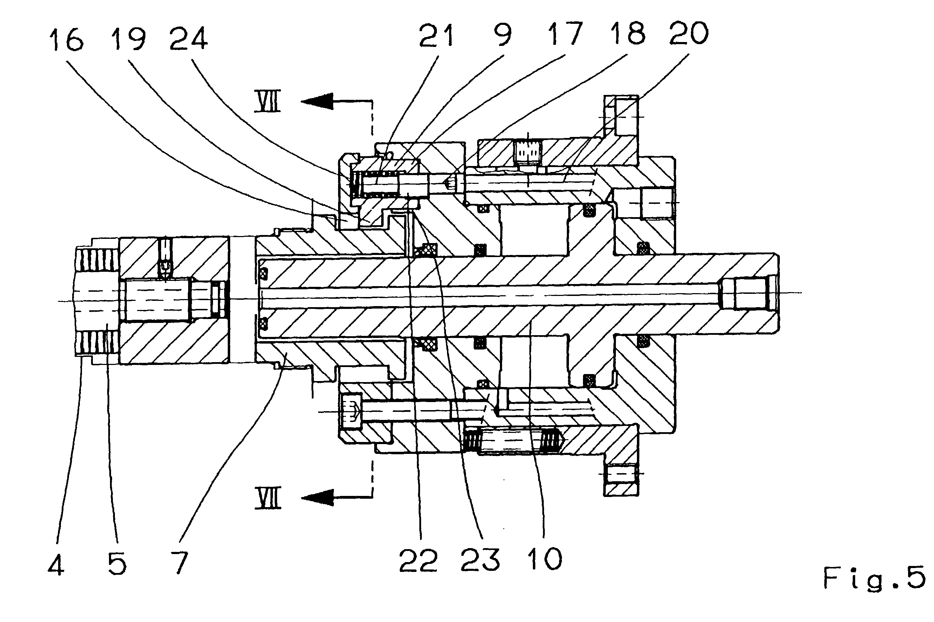

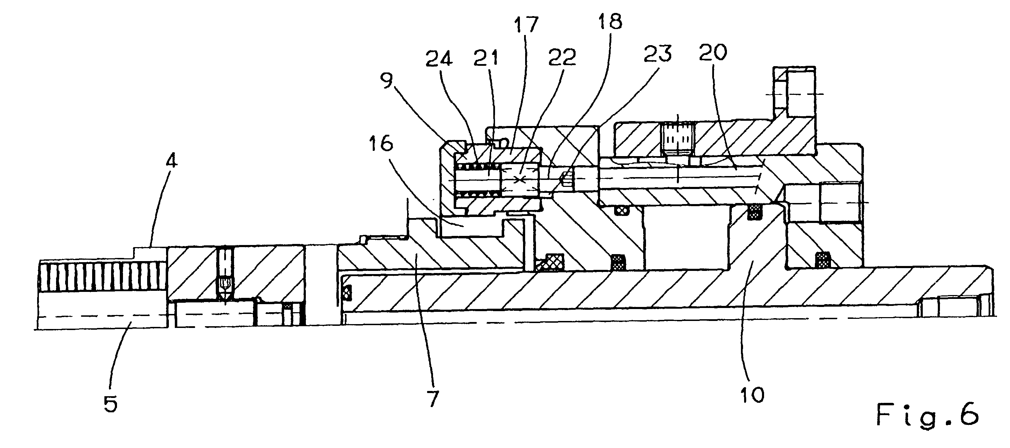

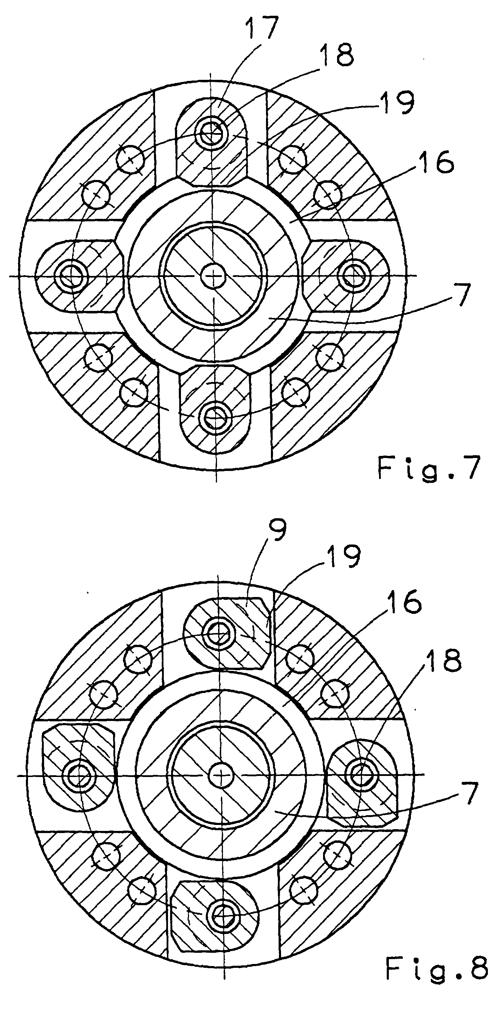

Bei der in den Fig. 5 bis 8 dargestellten Ausführungsform können Verriegelungselement 9 und Kupplungsring 7 zum Verbinden oder Trennen in einer beliebigen Winkelstellung zueinander ausgerichtet sein, so daß sich dadurch nochmals eine Vereinfachung der Handhabung ergibt. Dazu weist der Kupplungsring 7 eine in Umfangsrichtung verlaufende Nut 16 auf, wobei das Verriegelungselement 9 paarweise vorgesehen und als um eine Achse 18 drehbarer Drehzapfen 17 ausgebildet ist. Jeder Drehzapfen 17 besitzt an dem dem Kupplungsring 7 zugewandten Ende eine auf einer Seite radial über seinen Umfang vorstehende Zapfennase 19, die aus der Lösestellung mit von dem Kupplungsring 7 abgewandter Zapfennase 19 in die Verriegelungsstellung überführbar ist, bei der die Zapfennase 19 in die Nut 16 des Kupplungsringes 7 ragt. Der Drehzapfen 17 wird betätigt, in dem durch eine Bohrung 20, die in der Verlängerung der Achse 18 des Drehzapfens 17 in der Löseeinheit 8 angeordnet ist, ein Werkzeug, beispielsweise ein Sechskantschlüssel, eingesteckt wird, mittels dessen der Drehzapfen 17 verdreht wird. Die Achse 18 des Drehzapfens 17 ist durch einen drehfest mit diesem verbundenen Stift 21 gebildet, an dem das durch die Bohrung 20 einsteckbare Werkzeug angreift. Der Stift 21 besitzt einen exzentrisch ausgebildeten Stiftbund 22, der in der Lösestellung an der Stirnseite eines exzentrisch zur Bohrung 20 ausgebildeten Sackloches 23 anliegt. Wird der Stift 21 und damit der Drehzapfen 17 verdreht, gleitet der Stiftbund 22 von der Stirnseite des Sackloches 23 herunter, bis er von dieser nicht mehr unterstützt wird und in der Verriegelungsstellung des Drehzapfens 17 in das Sackloch 23 herein rutscht, wobei er bei dieser Bewegung durch die Kraft einer Druckfeder 24 unterstützt wird. Diese Federkraft muß auch wieder überwunden werden, wenn die Verbindung gelöst werden soll.

## Patentansprüche

1. Löseeinheit einer Vorrichtung zum Betätigen eines an einer Arbeitsspindel (4) angeschlossenen, eine in axialer Richtung der Arbeitsspindel (4) verstellbare Zugstange (5) aufweisenden Spannkopfes (3), mit mindestens einem Verriegelungselement (9), das aus einer Verriegelungsstellung, in der es mit einem an der Arbeitsspindel (4) angeordneten Kupplungsring (7) in Eingriff steht, in eine Lösestellung ohne Eingriff bewegbar ist, und mit einem an die Zugstange (5) ansetzbaren, deren axialer Verstellung dienenden Kolben (10), **dadurch gekennzeichnet, daß** der Kupplungsring (7) und das ringförmige Verriegelungselement (9) komplementäre, sich nach dem Schloß-Schlüssel-Prinzip ergänzende Strukturen aufweisen, bei denen am Schloß ein Bolzen (11) als Codierung ausgebildet ist, der in der Lösestellung bei einer geeigneten Winkelstellung des Schlüssels durch eine Ausnehmung (14) in eine Nut (13) des Schlüssels einführbar und durch eine Relativdrehung von dem Kupplungsring (7) und dem ringförmigen Verriegelungselement (9) um deren Längsachse in die Verriegelungsstellung hinter die Nutwand verdrehbar ist.

2. Löseeinheit nach Anspruch 1, **dadurch gekennzeichnet, daß** der Kupplungsring (7) als Schloß mit dem Bolzen (11) und das Verriegelungselement (9) als Schlüssel mit der Ausnehmung (14) und der Nut (13) ausgebildet ist.

3. Löseeinheit nach Anspruch 1 oder 2, **dadurch gekennzeichnet, daß** der Bolzen (11) zu mehreren vorgesehen ist.

4. Löseeinheit nach Anspruch 2 oder 3, **dadurch gekennzeichnet, daß** das Verriegelungselement (9) in der der Arbeitsspindel (4) zugewandten Stirnseite eine Bohrung (12) mit der Nut (13) in der Wandung aufweist, wobei in die Bohrung (12) bei geeigneter Winkelstellung der Kupplungsring (7) mit dem Bolzen (11) einführbar ist.

5. Löseeinheit nach Anspruch 3 oder 4, **dadurch gekennzeichnet, daß** die Bolzen (11) jeweils paarweise diametral gegenüberliegen.

6. Löseeinheit nach Anspruch 5, **dadurch gekennzeichnet, daß** die Bolzen (11) gleichmäßig über den Umfang des Schlosses verteilt sind.

7. Löseeinheit mit den Merkmalen des Oberbegriffs von Anspruch 1, **dadurch gekennzeichnet, daß** der Kupplungsring (7) eine in Umfangsrichtung verlaufende Nut (16) aufweist, und daß das Verriegelungselement (9) als ein um eine Achse (18) drehbarer Drehzapfen (17) ausgebildet ist, der zu zweien als ein sich gegenüberliegendes Paar vorgesehen ist, daß jeder Drehzapfen (17) an dem dem Kupplungsring (7) zugewandten Ende eine auf einer Seite radial über seinen Umfang vorstehende Zapfennase (19) aufweist, die aus der Lösestellung mit von dem Kupplungsring (7) abgewandter Zapfennase (19) in die Verriegelungsstellung mit in die Nut (16) des Kupplungsringes (7) eingeführter Zapfennase (10) verdrehbar ist.

8. Löseeinheit nach Anspruch 7, **dadurch gekennzeichnet, daß** in der Verlängerung der Achse (18) des Drehzapfen (17) eine Bohrung (20) angeordnet ist, durch die ein Werkzeug zum Verdrehen des Drehzapfens (17) durchsteckbar ist.

9. Löseeinheit nach Anspruch 8, **dadurch gekennzeichnet, daß** die Achse (18) des Drehzapfens (17) durch einen drehfest mit diesem verbundenen Stift (21) gebildet ist, der einen exzentrisch ausgebildeten Stiftbund (22) aufweist, der in der Lösestellung an der Stirnseite eines exzentrisch zur Bohrung (20) ausgebildeten Sackloches (23) anliegt und in der Verriegelungsstellung des Drehzapfens (17) in das Sackloch (13) einführbar ist.

10. Löseeinheit nach Anspruch 9, **dadurch gekennzeichnet, daß** in der Verriegelungsstellung unter der Kraft einer Feder (24) der Stift (21) mit dem Stiftbund (12) in das Sackloch (23) einführbar ist.

## Claims

1. Release unit of a device for actuating a grip head (3) which is connected to a work spindle (4) and has a connecting rod (5) which is adjustable in an axial direction of the work spindle (4), with at least one locking element (9) which can be moved out of a locking position, in which it is engaged with a coupling ring (7) arranged on the work spindle (4), into a release position without engagement, and with a piston (10) which can be put on the connecting rod (5) in order to adjust it axially,
**characterised in that**
the coupling ring (7) and the ring-shaped locking element (9) have complementary structures which supplement one another according to the lock and key principle, in which a bolt (11) is formed, as a codification, on the lock, this [bolt] being capable, in the release position, at a suitable angle position of the key, of being inserted through a recess (14) into a groove (13) of the key, and of being turned through a relative turning of the coupling ring (7) and the ring-shaped locking element (9) around their longitudinal axis into the locking position behind the groove wall.

2. Release unit in accordance with claim 1, **characterised in that** the coupling ring (7) is designed as a lock with the bolt (11) and the locking element (9) is designed as a key with the recess (14) and the groove (13).

3. Release unit in accordance with claim 1 or 2, **characterised in that** the bolt (11) is provided several times.

4. Release unit in accordance with claim 2 or 3, **characterised in that** in the frontal face facing the work spindle (4), the locking element (9) has a drilled hole (12) with the groove (13) in the wall, wherein at a suitable angle position the coupling ring (7) with the bolt (11) can be inserted into the drilled hole (12).

5. Release unit in accordance with claim 3 or 4, **characterised in that** the bolts (11) in each case lie in pairs diametrically opposite one another.

6. Release unit in accordance with claim 5, **characterised in that** the bolts (11) are distributed evenly over the periphery of the lock.

7. Release unit with the features of the preamble of claim 1, **characterised in that** the coupling ring (7) has a groove (16) running in the circumferential direction, and that the locking element (9) is designed as a pivot journal (17) which can be turned around an axis (18) and which is provided in twos as a pair lying opposite one another; that on the end facing the coupling ring (7) each pivot journal (17) has a journal nose (19) which on one side projects radially over its circumference, and which can be rotated out of the release position with the journal nose (19) facing away from the coupling ring (7), into the locking position with the journal nose (10) inserted into the groove (16) of the coupling ring (7).

8. Release unit in accordance with claim 7, **characterised in that** arranged in the extension of the axis (18) of the pivot journal (17), there is a drilled hole (20) through which a tool can be inserted for rotating the pivot journal (17).

9. Release unit in accordance with claim 8, **characterised in that** the axis (18) of the pivot journal (17) is formed by a pin (21) which is connected to it in a rotation-proof manner, and which has a eccentrically designed pin shoulder (22) which, in the release position, rests against the frontal face of a blind hole (23) which is formed eccentrically to the drilled hole (20), and which in the locking position of the pivot journal (17) can be inserted into the blind hole (13).

10. Release unit in accordance with claim 9, **characterised in that** in the locking position, under the force of a spring (24), the pin (21) with the pin shoulder (12) can be inserted into the blind hole (23).

## Revendications

1. Unité de désaccouplement d'un dispositif pour actionner une tête de serrage (3) liée à une broche de travail (4) et comportant une tige de traction (5) déplaçable dans la direction axiale de ladite broche de travail (4), avec au moins un élément de verrouillage (9) qui peut être déplacé d'une position de verrouillage, dans laquelle il est en prise avec une bague d'accouplement (7) disposée sur la broche de travail (4), vers une position de désaccouplement, sans prise, et avec un piston (10) qui peut être lié à la tige de traction (5) et assure le déplacement axial de celle-ci, **caractérisée en ce que** la bague d'accouplement (7) et l'élément de verrouillage (9) annulaire présentent des structures complémentaires, qui se complètent selon le principe serrure-clé, parmi lesquelles un têton (11) est conformé en élément de codage qui, dans la position de désaccouplement, pour une position angulaire correspondante de la clé, peut être engagé par une échancrure (14) dans une rainure (13) de la clé, et, par une rotation relative de la bague d'accouplement (7) et de l'élément de verrouillage (9) annulaire autour de leur axe longitudinal, peut être amené dans la position de verrouillage derrière la paroi de la rainure.

2. Unité de désaccouplement selon la revendication 1, **caractérisée en ce que** la bague d'accouplement (7) est agencée sous forme de serrure portant le téton (11) et l'élément de verrouillage (9) est conformé en clé portant l'échancrure (14) et la rainure (13).

3. Unité de désaccouplement selon la revendication 1 ou 2, **caractérisée en ce qu'**il est prévu plusieurs têtons (11).

4. Unité de désaccouplement selon la revendication 2 ou 3, **caractérisée en ce que** l'élément de verrouillage (9) présente, dans sa face frontale tournée vers la broche de travail (4), un alésage (12) avec la rainure (13) aménagée dans la paroi, la bague d'accouplement (7) avec le téton (11) pouvant être engagée dans l'alésage (12), dans une position angulaire adaptée.

5. Unité de désaccouplement selon la revendication 3 ou 4, **caractérisé en ce que** les têtons (11) sont disposés par paires dans des positions diamétralement opposées.

6. Unité de désaccouplement selon la revendication 3 ou 4, **caractérisé en ce que** les têtons (11) sont régulièrement répartis sur le pourtour de la serrure.

7. Unité de désaccouplement présentant les caractéristiques du préambule de la revendication 1, **caractérisé en ce que** la bague d'accouplement (7) présente une rainure (16) qui s'étend dans la direction périphérique et **en ce que** l'élément de verrouillage (9) est conformé en bout d'arbre (17) tournant autour de l'axe (18), présent par paires disposées en vis-à-vis, **en ce que** chaque bout d'arbre (17), à son extrémité tournée vers la bague d'accouplement (7), présente un doigt (19) qui fait saillie radialement sur le pourtour et peut être amené par rotation de la position de désaccouplement, dans laquelle le doigt (19) est éloigné de la bague d'accouplement (7), dans la position de verrouillage, dans laquelle le doigt (10) est engagé dans la rainure (16) de la bague d'accouplement (7).

8. Unité de désaccouplement selon la revendication 7, **caractérisé en ce qu'**un trou (20) est aménagé dans le prolongement de l'axe (18) du bout d'arbre (17), trou dans lequel un outil peut être engagé aux fins de tourner le bout d'arbre (17).

9. Unité de désaccouplement selon la revendication 8, **caractérisé en ce que** l'axe (18) du bout d'arbre (17) est formé par une tige (21) solidaire en rotation de celui-ci, avec un collet (22) excentré qui, dans la position de désaccouplement est en contact avec la face frontale d'un trou borgne (23) excentré par rapport au trou (20) et qui, dans la position de verrouillage du bout d'arbre (17), peut être engagé dans le trou borgne (13).

10. Unité de désaccouplement selon la revendication 9, **caractérisé en ce que** dans la position de verrouillage, la tige (21) avec le collet (12) peut être engagée dans le trou borgne (23) sous la force d'un ressort (24).
